# EUROPÄISCHE PATENTANMELDUNG

(11) **EP 3 460 957 A1**
(43) Veröffentlichungstag der Anmeldung: **27.03.2019**
(21) Anmeldenummer: 17192920.1
(22) Anmeldetag: 25.09.2017
(51) Int. Cl.: H02K 3/12, H02K 3/14, H02K 15/02, H02K 15/00

(54) **STABWICKLUNG FÜR EINEN STATOR EINER ELEKTRISCHEN ROTIERENDEN MASCHINE**

(71) Anmelder: Siemens Aktiengesellschaft, 80333 München (DE)
(72) Erfinder: Sabelfeld, Ilja, 10119 Berlin (DE)

(57) **Zusammenfassung**

Die Erfindung betrifft eine Stabwicklung (4) für einen Stator (10) einer elektrischen rotierenden Maschine (2). Um eine geringe Wickelkopfausladung zu erreichen, wird vorgeschlagen, dass die Stabwicklung (4) als Zweischichtwicklung ausgebildet ist und eine Mehrzahl von Stabspulen (22) mit jeweils mindestens zwei geraden Spulenstäben (26,28) und mindestens zwei zumindest teilweise radial nach außen gebogenen Verbindungsleitern (34) umfasst, wobei die Spulenstäbe (26,28) einer Stabspule (22) an den axialen Enden jeweils über einen Verbindungsleiter (34) miteinander verbunden sind, wobei der Verbindungsleiter (34) im Wesentlichen senkrecht auf den jeweiligen Spulenstäben (26,28) angeordnet ist.

## Beschreibung

Die Erfindung betrifft eine Stabwicklung für einen Stator einer elektrischen rotierenden Maschine.

Ferner betrifft die Erfindung einen Stator für eine elektrische rotierende Maschine mit mindestens einer Stabwicklung.

Die Erfindung betrifft darüber hinaus eine elektrische rotierende Maschine mit mindestens einem Stator.

Überdies betrifft die Erfindung ein Verfahren zur Herstellung eines Stators mit mindestens einer Stabwicklung.

Derartige Stabwicklungen werden in elektrischen rotierenden Maschinen, insbesondere in Motoren und Generatoren, welche mit einer Leistung von mindestens einem Megawatt betreibbar und beispielsweise als Turbogeneratoren oder schnell drehende Motoren ausgeführt sind, eingesetzt. Da der zur Verfügung stehende, insbesondere axiale, Bauraum für eine derartige elektrische rotierende Maschine, beispielsweise durch eine anschließende Turbine begrenzt ist, soll die Maschinenlänge durch eine Reduktion der Wickelkopfausladung verkürzt werden. Darüber hinaus vergrößert sich ein Lagerabstand durch eine große Wickelkopfausladung, was sich negativ auf eine Rotordynamik auswirkt. Daher ist es erforderlich, eine möglichst kurze Wickelkopfausladung und damit eine möglichst geringe axiale Maschinenlänge zu erreichen.

Üblicherweise werden Stäbe nach einem Nutaustritt radial leicht, beispielsweise unter einem Winkel im Bereich von 15°, abgekröpft, das heißt radial nach außen gebogen, und anschließend tangential geführt, um einen Winkel zu einer Verbindungsstelle des nächsten Stabes zu überbrücken. Die Wickelkopfausladung wird dabei so gewählt, dass ein vorgeschriebener minimaler Abstand zwischen benachbarten Stäben eingehalten wird.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden. Die Längsseiten werden um 90° gebogen, um diese in die Nuten einzulegen und die Wickelkopfseiten von den Längsseiten abzukröpfen. Die Formspule ist als Einschichtformspule ausgeführt.

Der Erfindung liegt die Aufgabe zugrunde, eine Stabwicklung für einen Stator einer elektrischen rotierenden Maschine anzugeben, die eine geringe Wickelkopfausladung aufweist.

Die Aufgabe wird erfindungsgemäß durch eine Stabwicklung für einen Stator einer elektrischen rotierenden Maschine gelöst, welche als Zweischichtwicklung ausgebildet ist und eine Mehrzahl von Stabspulen mit jeweils mindestens zwei geraden Spulenstäben und mindestens zwei zumindest teilweise radial nach außen gebogenen Verbindungsleitern umfasst, wobei die Spulenstäbe einer Stabspule an den axialen Enden jeweils über einen Verbindungsleiter miteinander verbunden sind, wobei der Verbindungsleiter im Wesentlichen senkrecht auf den jeweiligen Spulenstäben angeordnet ist.

Ferner wird die Aufgabe erfindungsgemäß durch einen Stator für eine elektrische rotierende Maschine mit mindestens einer derartigen Stabwicklung gelöst.

Darüber hinaus wird die Aufgabe erfindungsgemäß durch eine elektrische rotierende Maschine mit mindestens einem derartigen Stator gelöst.

Überdies wird die Aufgabe erfindungsgemäß durch ein Verfahren zur Herstellung eines Stators mit mindestens einer derartigen Stabwicklung gelöst.

Die in Bezug auf die Stabwicklung nachstehend angeführten Vorteile und bevorzugten Ausgestaltungen lassen sich sinngemäß auf den Stator, die elektrische rotierende Maschine und das Herstellungsverfahren übertragen.

Der Erfindung liegt die Überlegung zugrunde, die Rotordynamik einer elektrischen rotierenden Maschine, insbesondere eines Turbogenerators, durch Verringerung einer Wickelkopfausladung einer Stabwicklung und damit eines Lagerabstandes zu verbessern, ohne auf die Vorteile einer Zweischichtwicklung verzichten zu müssen. Eine Zweischichtwicklung ist vorteilhaft, da durch sie, im Vergleich zu einer Einschichtwicklung, ein höherer Wicklungsfaktor, geringere Wicklungsverluste und ein kleinerer Oberwellengehalt erreicht werden. Um die Wickelkopfausladung der Stabwicklung zu verringern, werden zwei gerade Spulenstäbe, welche insbesondere in Nuten eines Statorblechpakets angeordnet sind, an ihren axialen Enden durch Verbindungsleiter miteinander verbunden. Ein in den Nuten befindlicher Teil der Wicklung wird Nutseite genannt, außerhalb der Nut befindliche Teile der Wicklung werden Stirnseiten genannt. Die Verbindungsleiter werden im Wesentlichen senkrecht, beispielsweise unter einem Winkel von 80° bis 90°, an den Spulenstäben befestigt und sind zumindest teilweise radial nach außen gebogen. Je steiler der Winkel ist, desto mehr verkürzt sich der Wickelkopf. Insbesondere sind die Nutseite und die Stirnseite im Wesentlichen senkrecht zueinander angeordnet. Neben der Verbesserung der Rotordynamik führt eine Reduzierung der Wickelkopfausladung zusätzlich zu einer Reduktion der Maschinenlänge, was zu einer Einsparung von Bauraum und Material führt. Bei einer Verringerung des Lagerabstandes können darüber hinaus kostengünstigere Lager, insbesondere Gleitlager, verwendet werden.

Die Verbindungsleiter werden beispielsweise aus einem Blech, insbesondere einem Kupferblech, hergestellt. Beispielsweise werden die Verbindungsleiter über Verbindungselemente, insbesondere Schrauben und/oder Bolzen, mit den Spulenstäben verbunden. Durch die Verwendung von Verbindungsleitern, welche mit den Spulenstäben verbunden werden, wird ein starkes Abbiegen eines Spulenleiters, beispielsweise um 90°, vermieden. Beispielsweise werden durch eine mechanische Trennung von Spulenstäben und Verbindungsleitern unterschiedliche Leitergeometrien ermöglicht, welche sich insbesondere positiv auf die elektrischen und thermischen Eigenschaften der Stabspulen auswirken.

In einer bevorzugten Ausgestaltung weisen die Spulenstäbe und die Verbindungsleiter jeweils einen rechteckigen Leiterquerschnitt mit einer im Wesentlichen identisch großen Leiterquerschnittsfläche und mit unterschiedlichem Seitenverhältnis auf. Da der maximale Strom durch einen Leiter von der stromdurchflossenen Leiterquerschnittsfläche abhängt, ist eine Stromtragfähigkeit bei identischen Leiterquerschnittsflächen optimal. Der Leiterquerschnitt eines Verbindungsleiters ist insbesondere breiter und flacher als der Leiterquerschnitt eines Spulenstabs. Insbesondere bei einem großen Schrittwinkel, beispielsweise von mindestens 135°, wird eine radiale Ausdehnung eines Wickelkopfes durch flachere Verbindungsleiter verringert. Ferner ist die Oberfläche der Verbindungsleiter, welche mit einem Kühlfluid, beispielsweise Luft, in Kontakt steht, größer, was sich positiv auf die Kühlung des Wickelkopfes auswirkt. Durch eine mechanische Trennung von Spulenstäben und Verbindungsleitern werden unterschiedliche Seitenverhältnisse der jeweiligen Leiter auf einfache Weise ermöglicht.

In einer weiteren vorteilhaften Ausführungsform ist ein Betrag des Seitenverhältnisses eines Leiterquerschnitts eines Verbindungsleiters größer als ein Betrag des Seitenverhältnisses eines Leiterquerschnitts eines Spulenstabes. Unter einem Seitenverhältnis ist ein Längenverhältnis einer längeren Seite zu einer kürzeren Seite zu verstehen. Durch ein größeres Seitenverhältnis des Leiterquerschnitts wird ein Verbindungsleiter flacher, wodurch eine radiale Ausdehnung des Wickelkopfes verringert wird. Ferner ist die Oberfläche des Verbindungsleiters, welche mit einem Kühlfluid, beispielsweise Luft, in Kontakt steht, größer, was sich positiv auf die Kühlung des Wickelkopfes auswirkt.

In einer weiteren vorteilhaften Ausgestaltung ist ein Verbindungsleiter über eine stoffschlüssige Verbindung mit einem Spulenstab verbunden. Durch eine stoffschlüssige Verbindung ist der Verbindungsleiter unlösbar mit dem Spulenstab verbunden. Eine derartige unlösbare Verbindung ist sehr präzise und wartungsarm.

Besonders vorteilhaft ist die stoffschlüssige Verbindung durch Schweißen und/oder Löten hergestellt. Derartige unlösbare Verbindungen sind sehr zuverlässig sowie leicht und günstig herzustellen.

In einer bevorzugten Ausgestaltung weist ein Verbindungsleiter zumindest ein erstes Leiterelement und ein zweites Leiterelement auf. Beispielsweise sind das erste Leiterelement mit einem ersten Spulenstab und das zweite Leiterelement mit einem zweiten Spulenstab verbunden. Insbesondere werden die beiden Leiterelemente nach dem Einsetzen der Stäbe in die Nuten stoffschlüssig miteinander verbunden, während die Leiterelemente mit den jeweiligen Stäben vor oder nach dem Einsetzen in die Nuten verbindbar sind. Durch eine Mehrteiligkeit der Verbindungsleiter werden die Herstellung der Verbindungsleiter und die Montage der Wicklung vereinfacht.

Besonders vorteilhaft sind das erste Leiterelement und das zweite Leiterelement symmetrisch angeordnet. Beispielsweise sind das erste Leiterelement und das zweite Leiterelement punktsymmetrisch angeordnet. Insbesondere in einer Zweischichtwicklung ist eine derartige punktsymmetrische Anordnung besonders platzsparend.

In einer weiteren vorteilhaften Ausgestaltung weist der Verbindungsleiter ein Verbindungsstück auf, welches das erste Leiterelement und das zweite Leiterelement miteinander verbindet. Beispielsweise ist das Verbindungsstück parallel zu den Spulenstäben angeordnet und unlösbar fest mit den Leiterelementen verbunden. Ein derartiges Verbindungsstück vereinfacht, insbesondere in einer Zweischichtwicklung, die Herstellung des Verbindungsleiters, da ein starkes Biegen eines Leiterelements, beispielsweise um 90°, vermieden wird.

In einer bevorzugten Ausführungsform weisen die Spulenstäbe voneinander elektrisch isolierte Teilleiter auf, welche in einem Wickelkopfabschnitt zumindest teilweise kurzgeschlossen sind. Durch einen derartigen Kurzschluss der Teilleiter reduziert sich die Anzahl der Verbindungsstellen erheblich.

In einer weiteren vorteilhaften Ausgestaltung sind die Teilleiter der Spulenstäbe in einem Nutabschnitt, insbesondere nach Art eines Roebelstabes, verdrillt. Damit sind die einzelnen Teilleiter in Summe über die axiale Länge des Statorblechpakets gleichen magnetischen Randbedingungen ausgesetzt, sodass der Strom in den einzelnen Teilleitern vergleichmäßigt wird. Daher werden Verluste durch Verdrillen der Spulenstäbe reduziert.

In einer weiteren vorteilhaften Ausführungsform sind die Spulenstäbe der jeweiligen Stabspule mit einem Schrittwinkel von mindestens 135° versetzt angeordnet. Durch einen derartig großen Schrittwinkel sind niederpolig, insbesondere zweipolig oder vierpolig, ausgeführte Maschinen, wie beispielsweise Turbogeneratoren und schnell drehende Motoren, realisierbar.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer Stabwicklung,
- FIG 2: einen perspektivisch dargestellten Ausschnitt einer Stabspule im Bereich eines Wickelkopfes,
- FIG 3: einen Querschnitt eines Spulenstabes,
- FIG 4: einen Querschnitt eines Verbindungsleiters,
- FIG 5: einen schematischen Ablauf einer Verbindung eines Leiterelements mit einem Spulenstab einer Stabspule,
- FIG 6: einen perspektivisch dargestellten Ausschnitt einer Stabspule in einem Verbindungsbereich zwischen einem Spulenstab und einem Leiterelement eines Verbindungsleiters,
- FIG 7: einen perspektivisch dargestellten Ausschnitt einer Stabwicklung im Bereich eines Wickelkopfes und
- FIG 8: eine frontale Darstellung der Stabwicklung im Bereich des Wickelkopfes.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Gleiche Bezugszeichen haben in den verschiedenen Figuren die gleiche Bedeutung.

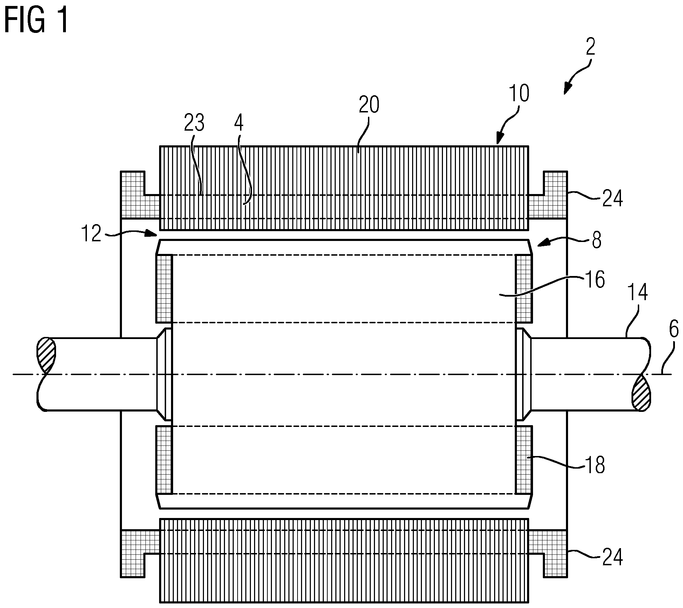

FIG 1 zeigt einen Längsschnitt einer elektrischen rotierenden Maschine 2 mit einer Stabwicklung 4. Die elektrische rotierende Maschine 2 ist beispielhaft als Synchronmaschine ausgeführt und umfasst einen um eine Rotationsachse 6 rotierbaren Rotor 8, der exemplarisch als Schenkelpolläufer ausgeführt ist, und einen den Rotor 8 umgebenden Stator 10, wobei sich zwischen dem Rotor 8 und dem Stator 10 ein Spalt 12, der insbesondere als Luftspalt ausgeführt ist, befindet. Die Rotationsachse 6 definiert eine Axialrichtung und eine Radialrichtung. Der Rotor 8 umfasst eine Welle 14 und Schenkelpole 16 mit einer Erregerwicklung 18. Alternativ weist der Rotor 8 ein Rotorblechpaket mit Permanentmagneten oder einem Kurzschlusskäfig auf. Der Stator 10 umfasst ein Statorblechpaket 20 in welcher die Stabwicklung 4 angeordnet ist, wobei die Stabwicklung 4 eine Mehrzahl von Stabspulen 22 umfasst. Die Stabspulen 22 der Stabwicklung 4 verlaufen in Nuten 23 in Axialrichtung durch das Statorblechpaket 20 und bilden an den axialen Enden des Statorblechpakets 20 Wickelköpfe 24 aus.

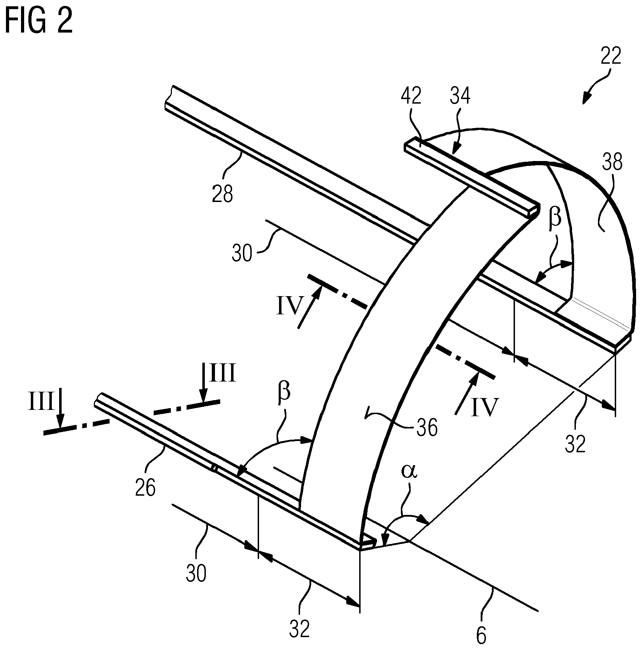

FIG 2 zeigt einen perspektivisch dargestellten Ausschnitt einer Stabspule 22 im Bereich eines Wickelkopfes 24, wobei die Stabwicklung 4 in einer Zweischichtwicklung ausgeführt ist. Ein erster Spulenstab 26 wird in einer Oberschicht und ein zweiter Spulenstab 28 wird, um einen Schrittwinkel α von mehr als 135° versetzt, in einer Unterschicht der Zweischichtwicklung angeordnet. Die Spulenstäbe 26, 28 umfassen jeweils einen Nutabschnitt 30, welcher sich, wie in FIG 1 zu sehen, im Bereich des Statorblechpakets 20 der elektrischen rotierenden Maschine 2 befindet, und im Bereich der axialen Enden des jeweiligen Spulenstabes 26, 28 jeweils einen Wickelkopfabschnitt 32. Im Bereich der Wickelkopfabschnitte 32 sind die Spulenstäbe 26, 28 über einen Verbindungsleiter 34 miteinander verbunden. Der Verbindungsleiter 34 weist jeweils ein erstes Leiterelement 36 und ein zweites Leiterelement 38 auf, wobei das zweite Leiterelement 38 im Wesentlichen punktsymmetrisch zum ersten Leiterelement 36 angeordnet ist. Das erste Leiterelement 36 ist mit dem zweiten Leiterelement 38 über ein Verbindungsstück 40 verbunden. Die Leiterelemente 36, 38 schließen mit den Spulenstäben 26, 28 einen im Wesentlichen rechten Winkel β ein, sodass der Verbindungsleiter 34 senkrecht zur Rotationsachse 6, welche parallel zu den Spulenstäben 26, 28 verläuft, angeordnet ist. Die Leiterelemente 36, 38 des Verbindungsleiters 34 sind als Bleche, insbesondere als Kupferbleche, mit einer Stärke im Bereich von 2 mm bis 10 mm ausgeführt. Die Breite der Bleche im Querschnitt liegt im Bereich von 50 mm bis 150 mm. Die Leiterelemente 36, 38 sind über eine stoffschlüssige Verbindung mit den Spulenstäben 26, 28 verbunden, wobei die stoffschlüssige Verbindung durch Löten hergestellt wird. Alternativ wird die stoffschlüssige Verbindung durch Schweißen hergestellt. Die Leiterelemente 36, 38 werden mit dem Verbindungsstück über dieselbe stoffschlüssige Verbindung verbunden.

Die Spulenstäbe 26, 28 und die Leiterelemente 36, 38 der Verbindungsleiter 34 weisen jeweils einen rechteckigen Leiterquerschnitt mit einer im Wesentlichen identisch großen Leiterquerschnittsfläche auf, wobei die Seitenverhältnisse der Leiterquerschnittsflächen unterschiedlich sind. Der Leiterquerschnitt eines Leiterelements 36, 38 ist breiter und flacher als der Leiterquerschnitt eines Spulenstabs 26, 28. Insbesondere bei niederpoligen elektrischen rotierenden Maschinen 2, welche beispielsweise zweipolig oder vierpolig ausgeführt sind, mit einem großen Schrittwinkel α von mindestens 135°, wird durch flachere Leiterelemente 36, 38 die radiale Ausdehnung des Wickelkopfes 24 verringert. Ferner ist die Oberfläche der Leiterelemente 36, 38 größer, was sich positiv auf die Kühlung der Wickelköpfe auswirkt.

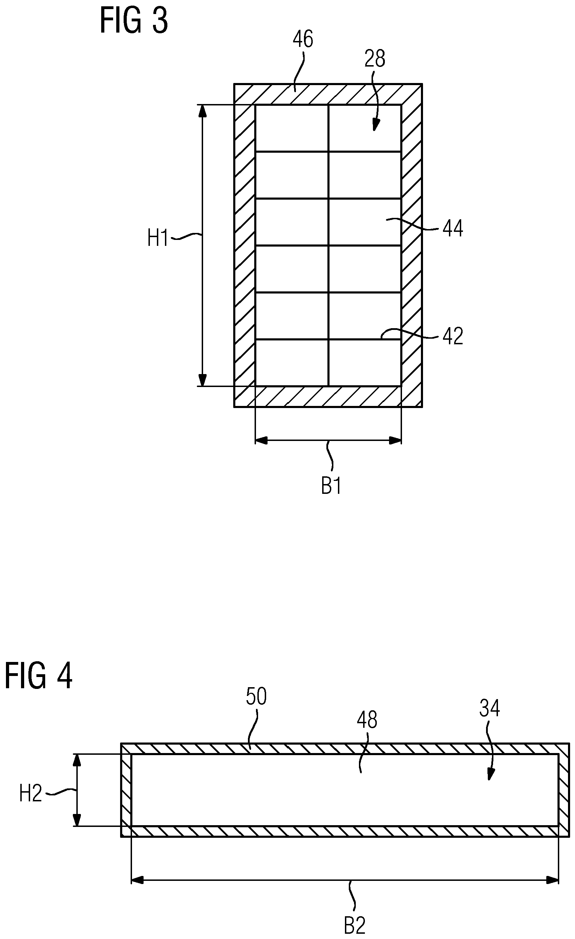

FIG 3 zeigt einen Querschnitt eines Spulenstabes 28 im Bereich des Nutabschnitts 30. Der Spulenstab 28 weist mehrere durch eine Teilleiterisolierung 42 voneinander isolierte Teilleiter 44 auf, die von einer Hauptisolierung 46 umgeben sind. Der Gesamtleiter des Spulenstabes weist im Querschnitt eine erste Breite B1 und eine erste Höhe H1 auf. Die weitere Ausführung des Spulenstabes 26, 28 in FIG 3 entspricht der Ausführung in FIG 2.

FIG 4 zeigt einen Querschnitt eines Verbindungsleiters 34 im Bereich eines Leiterelements 36, 38, wobei der Verbindungsleiter 34 im Querschnitt eine zweite Breite B2 und eine zweite Höhe H2 aufweist. Die Querschnittsfläche des Verbindungsleiters 34 entspricht der Querschnittsfläche des in FIG 3 gezeigten Spulenstabes 28. Der Betrag eines Seitenverhältnisses, welches als Quotient der Länge der längeren Seite zur Länge der kürzeren Seite definiert ist, des Verbindungsleiters 34 ist größer als der Betrag des Seitenverhältnisses des Spulenstabes 28.

Der Verbindungsleiter 34 umfasst mindestens einen metallischen Leiter 48, der insbesondere aus Kupfer hergestellt ist. Der metallische Leiter 48 ist von einer Isolierung 50 umgeben, welche, neben guten Isolationseigenschaften, insbesondere eine hohe thermische Leitfähigkeit aufweist, damit eine im metallischen Leiter 48 entstehende Verlustwärme effizient nach außen ableitbar ist. Die weitere Ausführung des Verbindungsleiters 34 in FIG 4 entspricht der Ausführung in FIG 2.

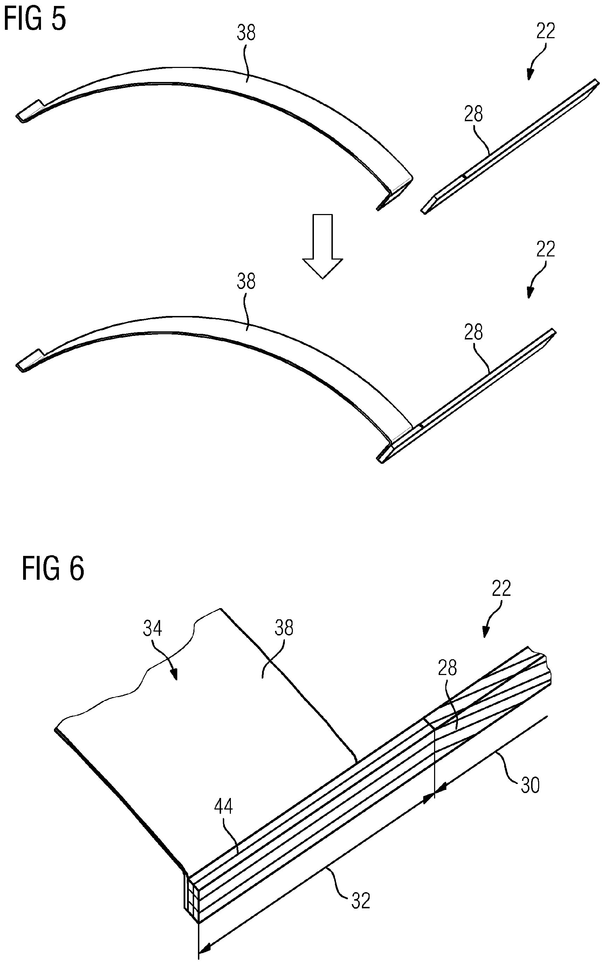

FIG 5 zeigt einen schematischen Ablauf einer Verbindung eines Leiterelements 38 mit einem Spulenstab 28 einer Stabspule 22. Das Leiterelement 38 ist an seinen Enden L-förmig ausgestaltet, sodass der Spulenstab 28 über eine optimal große Kontaktfläche 52 verbindbar ist. An der Kontaktfläche 52 ist die in FIG 4 dargestellte Isolierung 50 des Leiterelements 38 ausgespart. Durch Löten oder alternativ durch schweißen wird eine stoffschlüssige Verbindung zwischen dem L-förmigen Ende des Leiterelements 38 und dem Spulenstab 28 hergestellt. Die weitere Ausführung der Stabspule 22 in FIG 5 entspricht der Ausführung in FIG 2.

FIG 6 zeigt einen perspektivisch dargestellten Ausschnitt einer Stabspule 22 in einem Verbindungsbereich zwischen einem Spulenstab 28 und einem Leiterelement 38 eines Verbindungsleiters 34. Im Nutabschnitt 30 sind die Teilleiter 44, insbesondere nach Art eines Roebelstabes, miteinander verdrillt. Im Wickelkopfabschnitt 32 sind die Teilleiter 44 des Spulenstabes 28 zumindest teilweise miteinander verbunden. Insbesondere sind die Teilleiter 44, beispielsweise durch eine Lötverbindung, stoffschlüssig miteinander verbunden. Die weitere Ausführung der Stabspule 22 in FIG 6 entspricht der Ausführung in FIG 5.

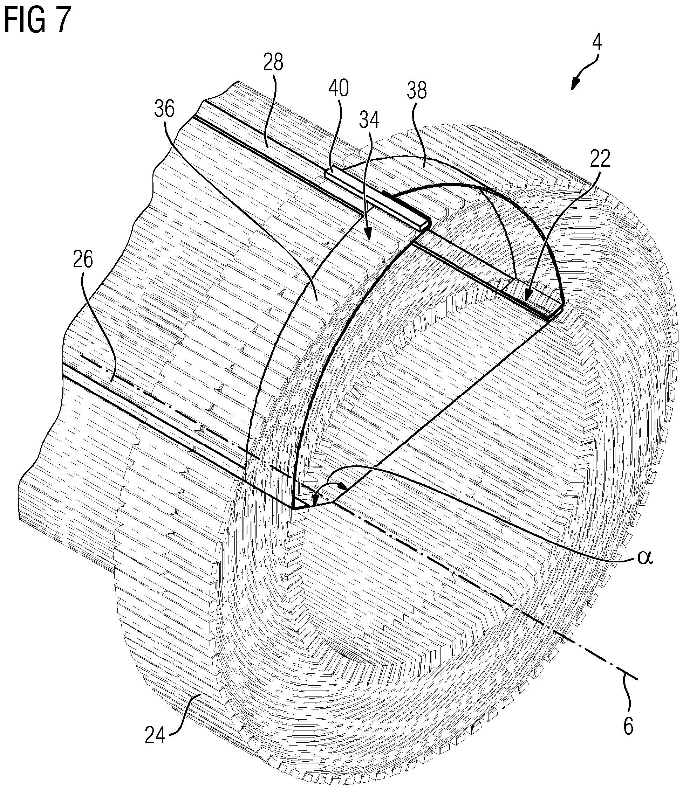

FIG 7 zeigt einen perspektivisch dargestellten Ausschnitt einer Stabwicklung 4 im Bereich eines Wickelkopfes 24. Die Stabspulen 22 sind identisch ausgeführt und werden in aus Gründen der Übersichtlichkeit nicht dargestellten Nuten 23 symmetrisch um die Rotationsachse 6 angeordnet. Je größer der Schrittwinkel α ist, desto mehr Leiterelemente 36, 38 sind im Wickelkopf 24 radial übereinander angeordnet, wobei ein vorgeschriebener minimaler Abstand zwischen radial übereinander angeordneten Leiterelementen 36, 38 eingehalten wird. Durch die, im Vergleich zu den Spulenstäben 26, 28, flachen Leiterelemente 36, 38 wird eine radiale Ausdehnung des Wickelkopfes 24 trotz eines großen Schrittwinkels α minimiert. Das Seitenverhältnis der Leiterelemente 36, 38 ist unter Anderem ein Kompromiss aus einer Wickelkopfausladung und einem Außendurchmesser des Wickelkopfes 24 der Stabwicklung 4. Die weitere Ausführung der Stabspulen 22 in FIG 7 entspricht der Ausführung in FIG 6.

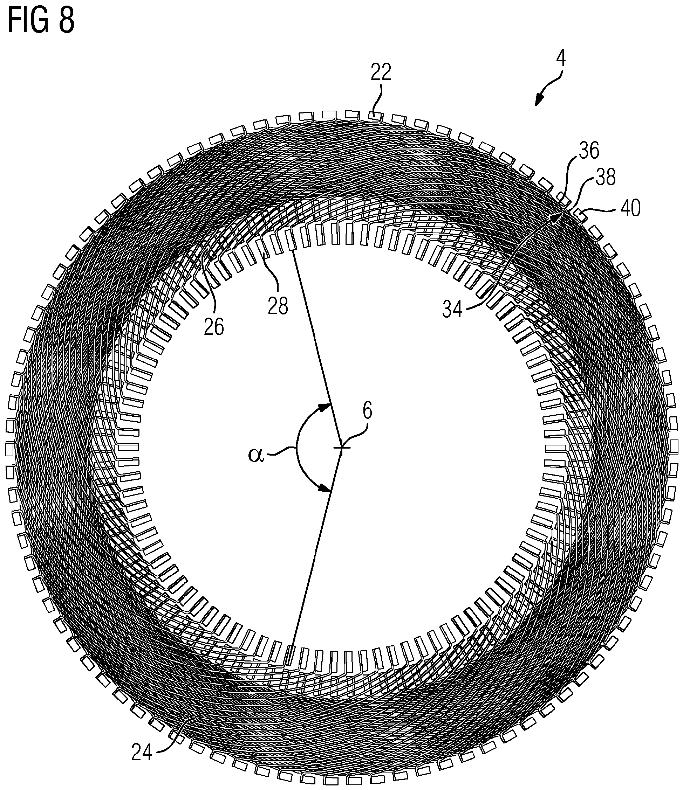

FIG 8 zeigt eine frontale Darstellung der Stabwicklung 4 im Bereich des Wickelkopfes 24. Die Stabwicklung 4 ist als Zweischichtwicklung für einen Stator 10 in einer elektrischen rotierenden Maschine 2 ausgeführt und weist jeweils 90 erste Spulenstäbe 26 in einer Oberschicht und 90 zweite Spulenstäbe 28 in einer Unterschicht auf, welche in 90 Nuten 23 angeordnet werden, wobei die Nuten 23 aus Gründen der Übersichtlichkeit nicht dargestellt sind.

Zusammenfassend betrifft die Erfindung eine Stabwicklung 4 für einen Stator 10 einer elektrischen rotierenden Maschine 2. Um eine geringe Wickelkopfausladung zu erreichen, wird vorgeschlagen, dass die Stabwicklung 4 als Zweischichtwicklung ausgebildet ist und eine Mehrzahl von Stabspulen 22 mit jeweils mindestens zwei geraden Spulenstäben 26, 28 und mindestens zwei zumindest teilweise radial nach außen gebogenen Verbindungsleitern 34 umfasst, wobei die Spulenstäbe 26, 28 einer Stabspule 22 an den axialen Enden jeweils über einen Verbindungsleiter 34 miteinander verbunden sind, wobei der Verbindungsleiter 34 im Wesentlichen senkrecht auf den jeweiligen Spulenstäben 26, 28 angeordnet ist.

## Patentansprüche

1. Stabwicklung (4) für einen Stator (10) einer elektrischen rotierenden Maschine (2),
welche als Zweischichtwicklung ausgebildet ist und eine Mehrzahl von Stabspulen (22) mit jeweils mindestens zwei geraden Spulenstäben (26,28) und mindestens zwei zumindest teilweise radial nach außen gebogenen Verbindungsleitern (34) umfasst, wobei die Spulenstäbe (26,28) einer Stabspule (22) an den axialen Enden jeweils über einen Verbindungsleiter (34) miteinander verbunden sind,
wobei der Verbindungsleiter (34) im Wesentlichen senkrecht auf den jeweiligen Spulenstäben (26,28) angeordnet ist.

2. Stabwicklung (4) nach Anspruch 1,
wobei die Spulenstäbe (26,28) und die Verbindungsleiter (34) jeweils einen rechteckigen Leiterquerschnitt mit einer im Wesentlichen identisch großen Leiterquerschnittsfläche und mit unterschiedlichem Seitenverhältnis aufweisen,

3. Stabwicklung (4) nach Anspruch 2,
wobei ein Betrag des Seitenverhältnisses eines Leiterquerschnitts eines Verbindungsleiters (34) größer ist als ein Betrag des Seitenverhältnisses eines Leiterquerschnitts eines Spulenstabes (26,28).

4. Stabwicklung (4) nach einem der vorherigen Ansprüche,
wobei ein Verbindungsleiter (34) über eine stoffschlüssige Verbindung mit einem Spulenstab (26,28) verbunden ist.

5. Stabwicklung (4) nach Anspruch 4,
wobei die stoffschlüssige Verbindung durch Schweißen und/oder Löten hergestellt ist.

6. Stabwicklung (4) nach einem der vorherigen Ansprüche,
wobei ein Verbindungsleiter (34) zumindest ein erstes Leiterelement (36) und ein zweites Leiterelement (38) aufweist.

7. Stabwicklung (4) nach Anspruch 6,
wobei das erste Leiterelement (36) und das zweite Leiterelement (38) symmetrisch angeordnet sind.

8. Stabwicklung (4) nach einem der Ansprüche 6 oder 7,
wobei der Verbindungsleiter (34) ein Verbindungsstück (40) aufweist, welches das erste Leiterelement (36) und das zweite Leiterelement (38) miteinander verbindet.

9. Stabwicklung (4) nach einem der vorherigen Ansprüche,
wobei die Spulenstäbe (26,28) voneinander elektrisch isolierte Teilleiter (42) aufweisen, welche in einem Wickelkopfabschnitt (32) zumindest teilweise kurzgeschlossen sind.

10. Stabwicklung (4) nach Anspruch 8,
wobei die Teilleiter (42) der Spulenstäbe (26,28) in einem Nutabschnitt (30), insbesondere nach Art eines Roebelstabes, verdrillt sind.

11. Stabwicklung (4) nach einem der vorherigen Ansprüche,
wobei die Spulenstäbe (26,28) der jeweiligen Stabspule (22) mit einem Schrittwinkel (β) von mindestens 135° versetzt angeordnet sind.

12. Stator (10) für eine elektrische rotierende Maschine (2) mit mindestens einer Stabwicklung (4) nach einem der Ansprüche 1 bis 11.

13. Elektrische rotierende Maschine (2) mit mindestens einem Stator (10) nach Anspruch 12.

14. Verfahren zur Herstellung eines Stators (10) mit mindestens einer Stabwicklung (4) nach einem der Ansprüche 1 bis 11,
wobei die Spulenstäbe (26,28) einer Stabspule (22) in Nuten (23) eingesetzt werden,
wobei daraufhin die Spulenstäbe (26,28) an den axialen Enden über jeweils mindestens einen Verbindungsleiter (34) miteinander verbunden werden,
wobei der Verbindungsleiter (34) im Wesentlichen senkrecht auf den jeweiligen Spulenstäben (26,28) angeordnet werden.

15. Verfahren zur Herstellung eines Stators (10) mit einer Stabwicklung (4) nach einem der Ansprüche 1 bis 11,
wobei ein Verbindungsleiter (34) zumindest ein erstes Leiterelement (36) und ein zweites Leiterelement (38) aufweist,
wobei die Spulenstäbe (26,28) an den axialen Enden jeweils mit einem Leiterelement (36,38) eines Verbindungsleiters (34) verbunden werden,
wobei die Leiterelemente (36,38) im Wesentlichen senkrecht auf den jeweiligen Spulenstäben (26,28) angeordnet werden,
wobei daraufhin die Spulenstäbe (26,28), welche mit den Leiterelementen (36,38) verbunden sind, in Nuten (23) eingesetzt werden,
wobei daraufhin die jeweiligen Leiterelemente (36,38), insbesondere über ein Verbindungsstück (40), verbunden werden.
